# EUROPÄISCHE PATENTANMELDUNG

(11) **EP 2 243 441 A2**
(43) Veröffentlichungstag der Anmeldung: **27.10.2010**
(21) Anmeldenummer: 10003237.4
(22) Anmeldetag: 26.03.2010
(51) Int. Cl.: A61C 5/06

(54) **Kunststoffkapsel zum Lagern und Ausbringen von fließfähigen Dentalwerkstoffen sowie Applikator zu deren Aufnahme**

(30) Priorität: 21.04.2009 DE 102009017980
(71) Anmelder: Heraeus Kulzer GmbH, 63450 Hanau (DE)
(72) Erfinder: Albach, Andrej, 61273 Wehrheim (DE); Zumkeller, Hans-Joachim, Dr., 61276 Weilrod (DE)
(74) Vertreter: Kühn, Hans-Christian

(57) **Zusammenfassung**

Die Erfindung betrifft eine Kunststoffkapsel zur Aufbewahrung und Abgabe von Dentalmaterial, wobei die Kapsel in einem ersten Kapselabschnitt einen zylindrischen Hohlraum aufweist und in einem zweiten Kapselabschnitt den ersten und einen dritten Kapselabschnitt miteinander verbindet und der dritte Kapselabschnitt ein zum ersten Kapselabschnitt abgewinkelter Ausgabestutzen ist, **dadurch gekennzeichnet, dass** der erste Kapselabschnitt eine verstärkte und eine rund ausgebildete Längsseite aufweist und die verstärkte Längsseite eine Kante an einem Rundrohr ist, wobei die Kante die Verstärkung bildet, sowie ähnliche Kapseln mit zwei Verstärkungskanten.

## Beschreibung

Die Erfindung betrifft eine Kunststoffkapsel zur Aufbewahrung und Abgabe von Dentalmaterial mit einem abgewinkelten Ausgabestutzen an einem zylindrischen Kanal. Der Außendurchmesser und ein minimaler Innendurchmesser sind durch marktübliche Applikatoren vorgegeben. Der zugehörige Applikator ist eine zangenähnliche Halte- und Auspressvorrichtung. Die dung betrifft auch einen derartigen Applikator und das Zusammenwirken von Applikator und Kapsel, sowie die Herstellung der Kapseln.

Eine gattungsgemäße Kapsel wird gemäß DE 102 18 859 A1/B4 durch ein Röhrchen mit einem kreisförmigen Querschnitt gebildet, wobei an einem ersten Ende ein kreisförmiger Kragen angeordnet ist. In einem zweiten Abschnitt verjüngt sich der Innendurchmesser. Bei zu hohem Auspressdruck reißt der Kragen oder ein dritter Kapselabschnitt, der als Austrittskanal einen Winkel α im Bereich von 30 Grad bis 60 Grad zur Längsachse des ersten Kapselabschnitts aufweist.

Die Aufgabe der vorliegenden Erfindung besteht darin, Kapseln bereitzustellen, die einem höheren Auspressdruck standhalten, und die möglichst leicht zu beschriften sind.

Zur Lösung der Aufgabe wird die Kapsel einseitig verstärkt, insbesondere auf der gegenüber der Austrittsseite befindlichen Längsseite des Kanals eben ausgebildet. Dabei kann die Masse bzw. die Querschnittsfläche der Kapsel in diesem Bereich um 20%, insbesondere über 30% und ganz bevorzugt um über 50% erhöht werden.

Erfindungsgemäße Lösungen sind in den unabhängigen Ansprüchen beschrieben. Die abhängigen Ansprüche beschreiben bevorzugte Ausführungen.

Erfindungsgemäß wird zur Aufbewahrung und Abgabe von Dentalmaterial eine Kunststoffkapsel bereitgestellt, die in einem ersten Kapselabschnitt einen zylindrischen Hohlraum aufweist. Ein zweiter, als Adapter ausgebildeter Kapselabschnitt passt einen zum ersten Kapselabschnitt abgewinkelten dritten als Ausgabestutzen dienenden Kapselabschnitt bezüglich der äußeren und inneren Form an den ersten Kapselabschnitt an. Erfindungsgemäß erfolgt eine kantenartige Verstärkung des ersten Kapselabschnitts oder eine auf zwei Kanten basierende flache Längsseite.

In einer bevorzugten Ausführung verläuft eine ebene Längsseite zwischen zwei Kanten, so dass ein runder Basiskörper von zwei im Wesentlichen dreieckig über die Rundform hinaus ausgebildeten Strängen verstärkt wird.

Prinzipiell ist auch eine Verstärkung in Form eines nahezu dreieckigen Stranges möglich, so dass in dieser Ausführung der erste Kapselabschnitt einen Umriss aufweist, der so aussieht, als ob einem Rundrohr ein Giebeldach aufgesetzt würde. In dieser Ausführung wird der Hohlraum des ersten Kapselabschnittes mehr vom Rundrohr umschlossen als von den beiden zueinander dreieckig angeordneten Flächen der Verstärkung, die in diesem Fall eine Kante ist.

In der bevorzugten Ausführung mit einer planaren Fläche zwischen zwei Kanten weist der verstärkte Bereich bezüglich der äußeren Abmessungen die Merkmale eines Quaders auf und umschließt den zylindrischen Hohlraum mit dem unverstärkten, als Rundrohrhälfte ausgebildetem Teil der Kunststoffkapsel jeweils zur Hälfte.

Die erfindungsgemäße Lösung gestattet es, durch einseitige Verstärkung eine stabilisierte Kapsel bereitzustellen, die bezüglich der Dimensionierung an bestehende Applikatorenkolben und -kappen für den Ausgabestutzen unverändert bleiben. Der erste Kapselabschnitt wird durch die Verstärkung gegenüber einem Rundrohr in seiner Masse, seinem Materialvolumen und seiner Material aufweisenden Querschnittsfläche erhöht. Die Verstärkung wirkt sich aufgrund der dünnen Rohrwandungen gravierend aus. Die über ein Rundrohr hinausgehende Verstärkung beträgt 20% oder mehr Masse oder Volumen des Materials, bezogen auf ein Rundrohr, insbesondere über 30%. Verstärkungen, die mindestens 50% der Masse eines ihnen zu Grunde gelegten Rundrohrs aufweisen, sind erfindungsgemäß ermöglicht.

Es hat sich bewährt, die Kapsel einstückig herzustellen, Verstärkung und Ausgabestutzen auf entgegengesetzten Seiten anzuordnen, oder den ersten Kapselabschnitt mit einem Kragen auszubilden.

Durch die Verstärkung kann die Kapsel wesentlich höhere Auspresskräfte halten, insbesondere > 1000 N. Weiterhin bietet die flache Oberfläche einen geeigneten Platz, um Informationen, wie Produktname, Chargenbezeichnung und Verfallsdatum anzubringen. Die Ausführung mit einem rechteckigen Kragen führt zu einer eindeutigen Ausrichtung im Applikator. Die Kanten oder geraden Flächen ermöglichen ein Ausrichten der Kapsel in einer automatisierten Fertigung. Im Folgenden wird die Erfindung mit Bezug auf die anliegenden Zeichnungen verdeutlicht.

Die Ausbildung der Kapsel mit einer flachen Seite ermöglicht eine einfache, gut lesbare, vierzeilige Beschriftung. Die flache Seite kann sehr effizient mit einem Laser beschriftet werden. Eine Grobbeschriftung der runden Teile lässt sich durch geprägte Spritzgussteile erzielen. Gemäß einer erfindungsgemäßen Ausführung wird die Kapsel im Spritzguss hergestellt. Die Verstärkung wird durch die äußere Abmessung der Spritzgussform bestimmt. Weist die Spritzgussform eine Kante auf, so bildet sich die Kante während des Spritzgussverfahrens als Verstärkung der Kapsel ab. Ist die Spritzgussform ein Profil, welches auf einer Seite rechteckig und auf der anderen Seite rund ist, so wird eine auf zwei Kanten basierende flache Seite der Kapsel ausgebildet.

Die erfindungsgemäße Kapsel ist bei den zur Verfügung stehenden Applikatoren in ihrer Lage festgelegt, da sich die Kapsel wegen der Kante in der Einrichtung zur Aufnahme der Kapsel nicht mehr drehen lässt. Erfindungsgemäß wird deshalb ein Applikator mit einer axial drehbaren Halteeinrichtung für die Kapsel bereitgestellt. In einer bevorzugten Ausführung weist der Applikator zwei Arretierungspositionen auf, die eine bevorzugte Haltung beim Applizieren des Dentalmaterials in den Unter- oder den Oberkiefer ermöglichen. Der Applikator ist autoklavierbar, um den hygienischen Anforderungen zu entsprechen.

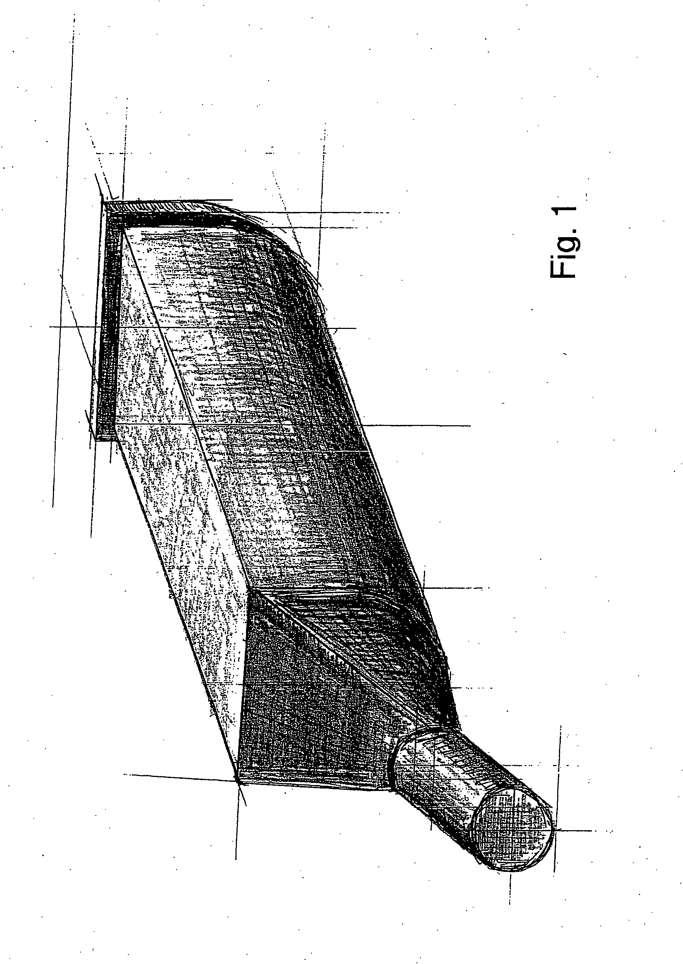

- Fig. 1: zeigt eine perspektivische Sicht der Kapsel;
- Fig. 2: ist eine technische Zeichnung der die Kapsel kennzeichnenden Schnitte.

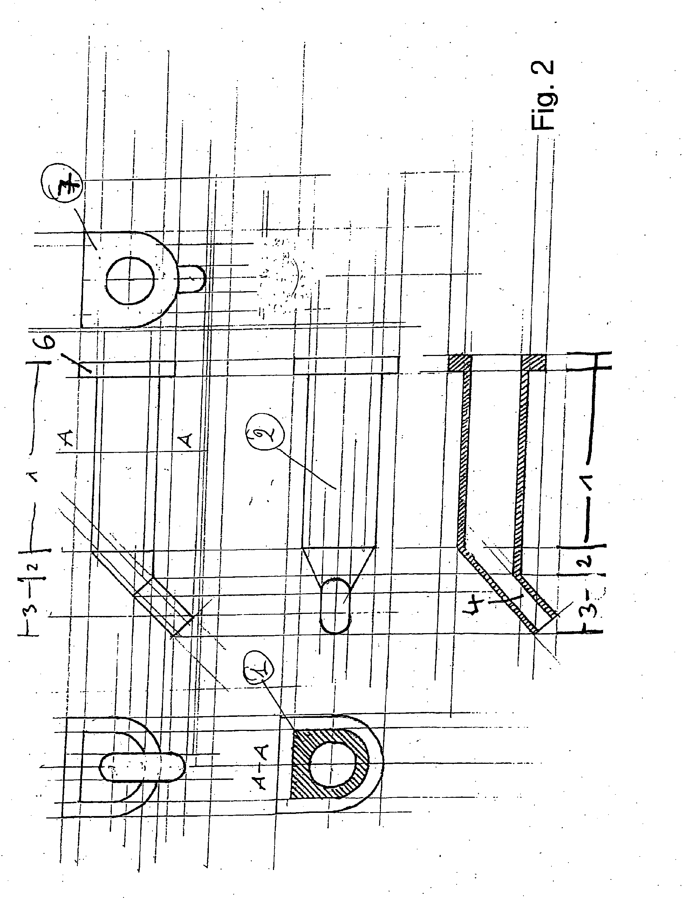

Gemäß Figur 2 besteht eine einstückige Kunststoffkapsel aus drei Kapselabschnitten 1, 2 und 3. Kapselabschnitt 1 weist einen Kragen 6 und der Kapselabschnitt 3 weist einen zylindrischen Hohlraum 4 auf. Der Umfang des Querschnitts 7 des Kapselabschnitts 1 setzt sich aus einem Halbkreis und einer Quadrathälfte zusammen, wobei der Durchmesser des Halbkreises der Länge des Quadrats entspricht, so dass zwei entsprechende Formteile bündig ineinander übergehen. Gegenüber einer kreisrunden Ausführung ist der Querschnitt um die Kanten des Quadrats erweitert, die für sich jeweils genommen näherungsweise die Form eines rechtwinkligen Dreiecks ausbilden. Die Dreiecksform ist dadurch gestört, dass die Hypotenuse durch den Kreisbogen eingedellt ist. Die Kanten sind abgerundet und weisen entsprechend dem quadratischen Anteil des Umrisses einen rechten Winkel auf. Die Verstärkung besteht daher aus zwei Prismen mit rechtwinklig, annähernd dreieckigen Grundflächen. Die Abweichung von der Dreiecksform entspricht dem Ersatz der Hypotenuse durch den Kreisbogen. Der Kragen 6 umrandet den äußeren Umriss des Kapselabschnitts 1.

Das Adaptionsteil 2 weist einen stumpfartig verlaufenden Innendurchmesser auf, der den zylindrischen Hohlraum 4 bündig an den Innendurchmesser des Ausgabestutzens 3 überführt. Parallel hierzu wird die äußere Abmessung des Kapselabschnitts 1 auf die äußere Abmessung des Ausgabestutzens überführt. Hieran schließen sich beidseitig zwei Dreiecksflächen an, um die quaderförmigen Außenflächen der Verstärkung verjüngend bis zum Ausgabestutzen fortzuführen. Zur Adaption der Basisfläche 7 des Quaders an den Ausgabestutzen enthält das Adaptionsteil eine trapezförmige Fläche, die mit einem runden Ausschnitt an den Ausgabestutzen angepasst ist.

Die Kunststoffkapsel wird im Kunststoffspritzguss-Verfahren hergestellt. Dazu wird mit einer Spritzgießmaschine der Werkstoff in einer Spritzeinheit plastifiziert und in ein Spritzgießwerkzeug eingespritzt. Der Hohlraum im Spritzgießwerkzeug bestimmt die Form und die Oberflächenstruktur des fertigen Teils. Zur Bildung der Innenkontur werden Kerne eingesetzt. Es können alles gängigen Kunststoffe (PE, PP, POM, PA) eingesetzt werden. Um die Lichtdichtheit der Kapsel sicherzustellen, wird der Kunststoff vor der Verarbeitung in geeigneter Weise eingefärbt.

Nach der Herstellung der Kunststoffkapsel wird sie zur Einhaltung der hygienischen Anforderungen gewaschen.

Die so hergestellte Kunststoffkapsel wird mit einem hochviskosen Produkt (P9) befüllt, dessen Viskosität 8,5 - 10⁶ MPas beträgt. Die Kapsel wird mit Kappen verschlossen und nach Abnahme der Kappen mit einer Auspresskraft von > 1000 N verwendet. Im Gegensatz zu bekannten Kapseln ist unter den erfindungsgemäßen Kapseln kein Ausfall zu beobachten.

## Patentansprüche

1. Kunststoffkapsel zur Aufbewahrung und Abgabe von Dentalmaterial, wobei die Kapsel in einem ersten Kapselabschnitt (1) einen zylindrischen Hohlraum (4) aufweist und in einem zweiten Kapselabschnitt (2) den ersten und einen dritten Kapselabschnitt miteinander verbindet und der dritte Kapselabschnitt (3) ein zum ersten Kapselabschnitt (4) abgewinkelter Ausgabestutzen (3) ist, **dadurch gekennzeichnet, dass** der erste Kapselabschnitt (1) eine verstärkte und eine rund ausgebildete Längsseite aufweist und die verstärkte Längsseite eine Kante an einem Rundrohr ist, wobei die Kante die Verstärkung bildet.

2. Kunststoffkapsel zur Aufbewahrung und Abgabe von Dentalmaterial, wobei die Kapsel in einem ersten Kapselabschnitt (1) einen zylindrischen Hohlraum (4) aufweist und in einem zweiten Kapselabschnitt (2) den ersten und einen dritten Kapselabschnitt miteinander verbindet und der dritte Kapselabschnitt (3) ein zum ersten Kapselabschnitt (1) abgewinkelter Ausgabestutzen (3) ist, **dadurch gekennzeichnet, dass** der erste Kapselabschnitt (1) eine flach und eine rund ausgebildete Längsseite aufweist und die flache Längsseite zwei Kanten als Verstärkungen gegenüber einem Rundrohr aufweist.

3. Kunststoffkapsel nach Anspruch 1 oder 2, **dadurch gekennzeichnet, dass** der erste Kapselabschnitt (1) einen Kragen aufweist

4. Kunststoffkapsel nach mindestens einem der Ansprüche 1 bis 3, **dadurch gekennzeichnet, dass** der erste Kapselabschnitt (1) durch die Verstärkung mindestens 20 Gew.% mehr Material als ein vergleichbares, unverstärktes Rundrohr aufweist.

5. Kunststoffkapsel nach Anspruch 4, **dadurch gekennzeichnet, dass** der erste Kapselabschnitt (1) durch die Verstärkung über 30 Gew.-% mehr Material als ein Rundrohr ohne Verstärkung aufweist.

6. Kapsel nach Anspruch 5, **dadurch gekennzeichnet, dass** der erste Kapselabschnitt (1) durch die Verstärkung mindestens 50 Gew.-% mehr Material als ein Rundrohr ohne Verstärkung aufweist.

7. Kunststoffkapsel nach mindestens einem der Ansprüche 1 bis 6, **dadurch gekennzeichnet, dass** die Verstärkung auf der dem Ausgabestutzen (3) abgewandten Seite angeordnet ist.

8. Kunststoffkapsel nach mindestens einem der Ansprüche 1 bis 7, **dadurch gekennzeichnet, dass** der zylindrische Hohlraum (4) zwischen einer äußerlich runden Rinne und einer äußerlich quaderförmigen Rinne ausgebildet ist.

9. Kunststoffkapsel nach mindestens einem der Ansprüche 1 bis 8, **dadurch gekennzeichnet, dass** die Kunststoffkapsel einstückig ausgebildet ist.

10. Kunststoffkapsel nach mindestens einem der Ansprüche 1 bis 9, **dadurch gekennzeichnet, dass** sie auf einer flachen Seite vierzeilig beschriftet ist.

11. Verwendung einer Kunststoffkapsel nach mindestens einem der Ansprüche 1 bis 10 zum Applizieren einer viskosen Dentalmasse, insbesondere mit einer Viskosität von 8,5 bis 10⁶ MPas.

12. Verwendung einer Kunststoffkapsel nach einem der Ansprüche 1 bis 10 mit einer Auspresskraft von 600 N bis 2000 N, insbesondere 600 N bis 1000 N.

13. Spritzgussverfahren zur Herstellung einer Kunststoffkapsel mit einem einen zylindrischen Hohlraum (4) aufweisenden ersten Kapselabschnitt (1), einem mittleren, den ersten und einen dritten Kapselabschnitt miteinander verbindenden Kapselabschnitt (2), und einem dritten Kapselabschnitt (3), der ein zum ersten Kapselabschnitt (1) abgewinkelter Ausgabestutzen (3) ist, **dadurch gekennzeichnet, dass** der erste Kapselabschnitt (1) als längsseitig durch eine Kante verstärktes Rundrohr ausgebildet wird.

14. Spritzgussverfahren zur Herstellung einer Kunststoffkapsel mit einem einen zylindrischen Hohlraum (4) aufweisenden ersten Kapselabschnitt (1), einem mittleren, den ersten und einen dritten Kapselabschnitt miteinander verbindenden Kapselabschnitt, und einem dritten Kapselabschnitt (3), der ein zum ersten Kapselabschnitt (1) abgewinkelter Ausgabestutzen ist (3), **dadurch gekennzeichnet, dass** der erste Kapselabschnitt (1) auf einer Seite rund und auf einer Seite flach ausgebildet wird.

15. Applikator zur Aufnahme und zum Auspressen von Dentalmaterial aus einer Kunststoffkapsel gemäß einem der Ansprüche 1-10, **dadurch gekennzeichnet, dass** die Aufnahmeeinrichtung für die Kunststoffkapsel axial drehbar ist.

16. Applikator nach Anspruch 15, **dadurch gekennzeichnet, dass** die Einrichtung zur Aufnahme der Kunststoffkapsel zwei Arretierungspositionen aufweist.
